# EUROPEAN PATENT APPLICATION

(11) **EP 3 614 283 A1**
(43) Date of publication of application: **26.02.2020**
(21) Application number: 18787382.3
(22) Date of filing: 19.04.2018
(51) Int. Cl.: G06F 21/45

(54) **PERMISSION GRANTING METHOD AND SYSTEM BASED ON ONE-TO-ONE CORRESPONDENCE BETWEEN ROLES AND USERS**

(30) Priority: 22.04.2017 CN 201710268338
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/083812
(87) International publication number: WO 2018/192557

(57) **Abstract**

A role-based one-to-one method and system for granting permission to a user is disclosed in the present invention, including the following sequential steps: S1: creating roles, where each role is an independent individual rather than a group or class; S2: respectively authorizing the roles created in step S1; and S3: relating a user to a role, where one role can only be related to a unique user in the same period, and one user can be related to one or more roles. A role in the present invention is an independent individual, and is different from a conventional role of a group or class nature. One role can be related to only one user in a same period of time, thereby significantly improving permission management efficiency in using a system, making dynamic authorization simpler, more convenient, clearer, and more explicit, and improving efficiency and reliability of permission setting.

## Description

### BACKGROUND

### Technical Field

The present invention relates to a permission management method for a user in a management software system such as an ERP system, and more particularly, to a role-based one-to-one method and system for granting permission to a user.

### Related Art

Role-based access control (RBAC) is one of the most researched and mature management mechanisms for database permissions in recent years. It is considered to be an ideal alternative to conventional mandatory access control (MAC) and discretionary access control (DAC). The basic idea of role-based access control (RBAC) is to define different roles according to different functional positions in an enterprise organization view, encapsulate the access permissions of database resources into roles, and allow users to indirectly access database resources by being assigned different roles.

A large number of tables and views are often built in large application systems, which makes the management and authorization of database resources very complicated. It is extremely difficult for the user to directly manage the access and authorization of the database resources. It requires the user to have a profound understanding of the database structure and to be familiar with the use of the SQL language. Moreover, once the application system structure or security requirements have changed, a large number of complex and cumbersome authorization changes are required, and security vulnerabilities caused by unexpected authorization errors are very likely to occur. Therefore, designing a simple and efficient permission management method for large-scale application systems has become a common requirement for systems and system users.

The role-based permission control mechanism can manage the access permissions of the system simply and efficiently, which greatly reduces the burden and cost of the system permission management, and makes the system permission management more compliant with the business management specifications of the application system.

However, the conventional role-based permission management method for a user adopts the "role-to-user one-to-many" relation mechanism, and its "role" is a group or class in nature, that is, one role can simultaneously correspond to or be related to multiple users, and the role is similar to a post or a position or a type of work or other concepts. The permission granted to a user under this relation mechanism is basically divided into the following three forms: 1, as shown in FIG. 1, the permission is directly granted to the user, where the disadvantage is that the workload is large and the operation is frequent and troublesome; 2, as shown in FIG. 2, the role (class/group/post/work type) is authorized (a role can be related to multiple users), and the user obtains the permission through the role; 3, as shown in FIG. 3, the above two methods are combined.

In the foregoing descriptions, both 2 and 3 need to authorize the role of the class/group nature, and the way of authorization through the role of a class/group/post/work type nature has the following disadvantages: 1. Operations are difficult when user permissions change: in the actual process of using a system, it is often necessary to adjust the user's authority during the operation process. For example, in handling employee's permission changes, when the authority of an employee related to the role changes, it is improper to change the permissions of the entire role due to the change in the individual employee's permissions, because the role is also related to other employees whose permissions have not changed. Therefore, in response to this situation, either a new role is created to satisfy the employee whose permissions have changed, or permission is directly granted to the employee (disengaged from the role) based on the permission requirements. The above two processing methods not only require a long time for the role authorization in the case of a large number of role permissions, but also cause mistakes easily; it is cumbersome and troublesome for a user to operate, and is also prone to errors resulting in loss to the system user.
2. It is difficult to remember the specific permission contained in the role for a long time: if the role has more permission functions, it is difficult to remember the specific permissions of the role for a long time, and it is more difficult to remember permission differences between roles with similar permissions. If a new user needs to be related, it is impracticable to accurately determine how to select a role for relation.
3. Because user permissions change, more and more roles are created (if new roles are not created, it greatly increases direct authorization to the user), and it is more difficult to distinguish the specific permission differences between roles.
4. When a user is transferred from a post, if many permissions of the transferred user need to be assigned to other users, separating the permissions of the transferred user and creating roles to relate to other users are necessary. Such an operation is not only complicated and time consuming, but also prone to errors.

### SUMMARY

### Technical Problems

The object of the present invention is to overcome the deficiencies of the prior art, and provide a role-based one-to-one method and system for granting permission to a user. One role can only be related to a unique user in the same period, which greatly improves the efficiency of permission management of a system in use, makes dynamic authorization easier, more convenient, clearer and more explicit, and improves the efficiency and reliability of permission settings.

### Solutions to Problems

### Technical Solutions

The object of the present invention is achieved by the following technical solutions: a role-based one-to-one method for granting permission to a user, including the following sequential steps: S1: creating roles, each role being an independent individual, not a group/class; S2: authorizing the roles created in S1 respectively; S3: relating a user to a role, wherein one role can only be related to a unique user in the same period, and one user is related to one or more roles.

Authorization of a role includes authorization of a form, authorization of a menu, or authorization of a function.

When said role is created, a department must be selected. Once the role is created, the role belongs to the department, the role is unique under the department, and the role is authorized according to the work content of the role.

The role-based one-to-one method for granting permission to a user further includes a cross-department transfer management step, which specifically includes: (1) canceling the relation between the user and the role in an original department; and (2) relating the user to a role in a new department.

Said user only can determine the permission through the relation of said user to the role.

A role-based one-to-one method for granting permission to a user, including the following sequential steps: S1: creating roles, each role being an independent individual, not a group/class; S2: relating a user to a role, wherein one role can only be related to a unique user in the same period, and one user is related to one or more roles; S3: authorizing the roles created in S1 respectively.

Authorization of a role includes authorization of a form, authorization of a menu, or authorization of a function.

When said role is created, a department must be selected. Once the role is created, the role belongs to the department, the role is unique under the department, and the role is authorized according to the work content of the role.

The role-based one-to-one method for granting permission to a user further includes a cross-department transfer management step, which specifically includes: (1) canceling the relation between the user and the role in an original department; and (2) relating the user to a role in a new department.

Said user only can determine the permission through the relation of the user to the role.

A role-based one-to-one system for granting permission to a user, including: a role creation unit, a role authorization unit, and a user-role relation unit; wherein said role creation unit is used to perform role layout according to posts, and create system roles, each of which is an independent individual, not a group/class, said role authorization unit is used to grant permissions to the roles according to the work content of the roles, said user-role relation unit is used to relate a user to a role and ensure that one role can only be related to a unique user during the same period, and one user is related to one or more roles.

Said system role is composed of: a post name + a post number.

### Beneficial Effects of the Invention

### Beneficial Effects

(1) The conventional permission management mechanism defines a role as a group, a type of work, a class, etc. The role is in a one-to-many relation to the user. In the actual process of using a system, it is often necessary to adjust the user's authority during the operation process. For example, in handling employee's permission changes, when the authority of an employee related to the role changes, it is improper to change the permissions of the entire role due to the change in the individual employee's permissions, because the role is also related to other employees whose permissions have not changed. Therefore, in response to this situation, either a new role is created to satisfy the employee whose permissions have changed, or permission is directly granted to the employee (disengaged from the role) based on the permission requirements. The above two processing methods not only require a long time for the role authorization in the case of a large number of role permissions, but also cause mistakes easily; it is cumbersome and troublesome for a user to operate, and is also prone to errors resulting in loss to the system user.
   However, according to the method of the present application, because the role is an independent individual, the role permission can be changed to achieve the goal. Although the solution of the present application seems to increase the workload during system initialization, by means of copying or the like, roles can be created or authorized more efficiently than conventional roles of a group nature. Because the role of the group nature is not considered in the commonality of the related users, the solution of the prevent application will make the permission setting clear and explicit; especially after the system is used for a period of time (user/role authority dynamic changes), the solution of the prevent application can greatly improve the efficiency of the authority of the system in use, and make the dynamic authorization simpler, more convenient, clearer and more explicit, and improve the efficiency and reliability of the permission setting.
(2) The conventional group-based role authorization method is error-prone. The solution of the present application greatly reduces the probability of authorization errors, because in the solution of the present application, it is only necessary to consider the role as an independent individual, rather than considering the commonality of multiple users related to this set of roles as in the conventional method. Even if a permission authorization error occurs, the correction method of the present application is simple and takes a short time. However, in the case of a conventional role of a group nature, all users associated with the role are affected. Even if a permissions authorization error occurs, a correction method in this application is simple and takes a short time. However, in the case of the conventional group-type role, the commonality of all users related to the role needs to be considered during error correction. Modification is cumbersome, complex, and error-prone when the role has many function points, and in many circumstances, the problem cannot be solved unless a new role is created.
(3) In the conventional group-based role authorization method, if the role has more permission function points, it takes a long time to remember the specific permissions of the role, and it is more difficult to remember the difference in permissions between roles with similar permissions. If a new user needs to be related, it cannot accurately be determined how to select a role for association. In the method of the present application, the role itself has the nature of the post number/station number, and the choice is clear at a glance.
(4) When a user is transferred from a post, if many permissions of the transferred user need to be assigned to other users, separating the permissions of the transferred user and creating roles to relate to other users are necessary. Such an operation is not only complicated and time consuming, but also prone to errors.
   The solution of the present application is as follows: the transferred user is related to several roles. When the user is transferred from the post, firstly the user's relation to the role in the original department is canceled (the canceled roles can be re-related to other users), and then the user is related to roles in the new department. The operation is simple and will not go wrong.
(5) When creating a role, a department needs to be selected. Once the role is created, the department cannot be replaced. The department cannot be replaced due to the following reasons: Reason 1: Because the role in the present application is equivalent to a station number/post number, the work content/permissions of different serial numbers/post numbers are different. For example, the salesperson 1 role under the sales department and the developer 1 role of the technical department are two completely different station numbers/post numbers, and their permissions are different. Reason 2: If the department (sales department) of the salesperson 1 role is replaced with the technical department, and the role of the salesperson 1 is unchanged, there is a role in the technical department that has the permission of the sales department, which may lead to management confusion and security vulnerabilities.

### BRIEF DESCRIPTION OF THE DRAWINGS

### DESCRIPTION OF THE DRAWINGS

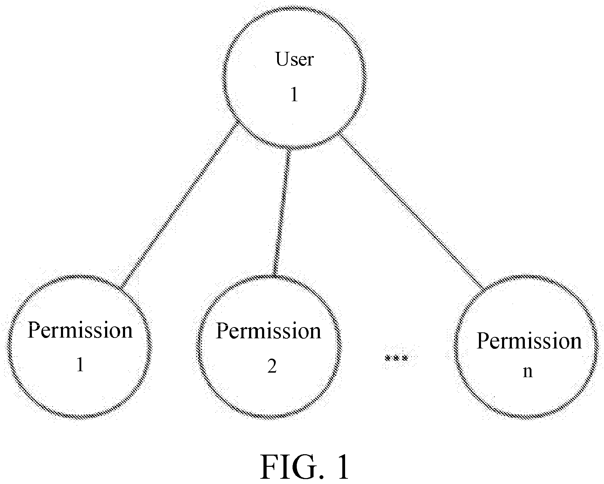

FIG. 1 is a schematic diagram of an implementation in which a system directly authorizes a user in the prior art;

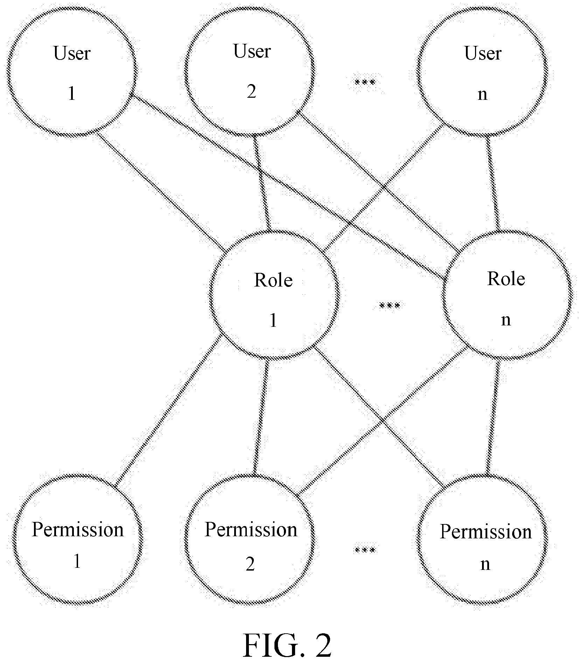

FIG. 2 is a schematic diagram of an implementation in which a system authorizes a role of a group or class nature in the prior art;

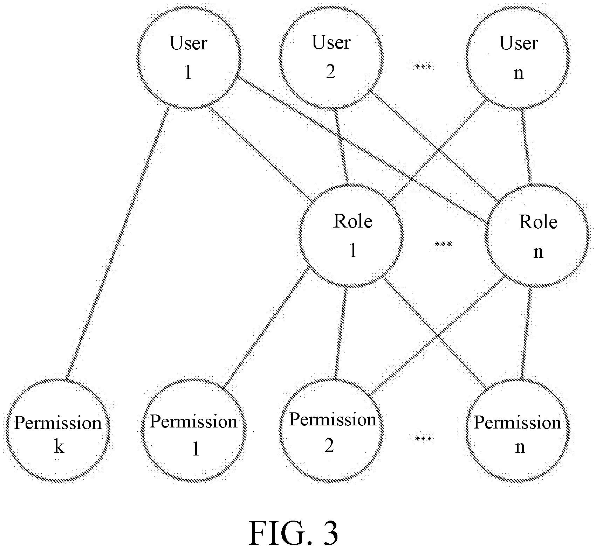

FIG. 3 is a schematic diagram of an implementation in which a system both directly authorizes a user and authorizes a role of a group or class nature in the prior art;

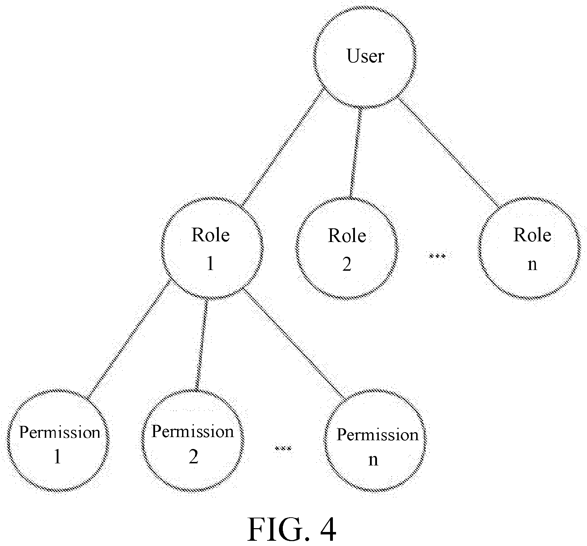

FIG. 4 is a schematic diagram of an implementation in which a system authorizes a user through a role of an independent individual nature according to the present invention; and

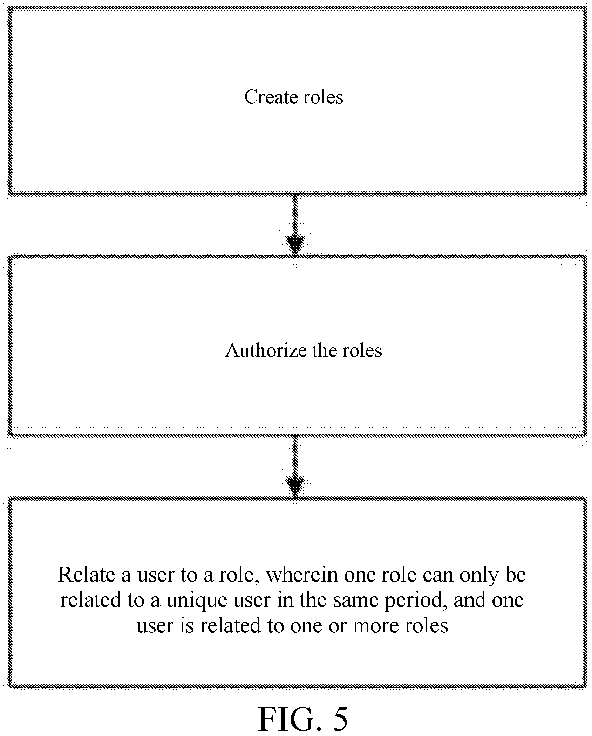

FIG. 5 is a flowchart of an authorization method according to the present invention.

### DETAILED DESCRIPTION

### Description of Embodiments

The technical solution of the present invention will be described in further detail below with reference to the accompanying drawings, but the scope of protection of the present invention is not limited to the following.

[Embodiment 1] As shown in FIG. 1, a role-based one-to-one method for granting permission to a user includes the following sequential steps: S1: creating roles, each role being an independent individual, not a group/class; S2: authorizing the roles created in S1 respectively; S3: relating a user to a role, wherein one role can only be related to a unique user in the same period, and one user is related to one or more roles; once the user is related to the role, the user has all the operation permission of the role. Further, the user can only determine the permission through the relation of the user to the role; if the user's permission is to be modified, the permission of the user related to the role can be changed by adjusting the permissions owned by the role; the user is not directly authorized, but is authorized by the role related to the user.

The role's relation to the user is one-to-one (when the role is related to a user, other users can no longer be related to the role; if the role is not related to the user, it can be related to other users). A user's relation to a role is one-to-many (one user can be related to multiple roles at the same time).

Definition of a role: A role is not in the nature of a group/class/category/post/position/work type or the like, but is of a non-collective nature. The role has its uniqueness and is an independent entity. Applied in an enterprise or institution, the role is equivalent to a post number (the post number herein is not a post, one post may have multiple employees at same time, but one post number corresponds to only one employee during the same period).

For example, in a company system, the following roles may be created: general manager, deputy general manager 1, deputy general manager 2, manager of Beijing sales department I, manager of Beijing sales department II, manager of Beijing sales department III, Shanghai sales engineer 1, Shanghai sales engineer 2, Shanghai sales engineer 3, Shanghai sales engineer 4, Shanghai sales engineer 5, and so on. Relationship between users and roles: If Zhang San, the company's employee, serves as the deputy general manager 2 of the company and serves as the manager of Beijing sales department I, Zhang San needs to be related to the deputy general manager 2 and the manager of Beijing sales department I, and Zhang San have the permission to both roles.

Authorization of a role: The system's authorization for a role includes, but is not limited to, authorization of a form, authorization of a menu, or authorization of a function. Authorization for the operation of the form includes, but is not limited to, addition, deletion, insertion and modification.

The concept of conventional roles is group/class/post/position/work type, and one role can correspond to multiple users. The concept of "role" in the present application is equivalent to the post number/work station number, and is similar to the role in the film and television drama: a role can only be played by one actor at the same time (childhood, juvenile, middle-age...), and an actor may play multiple roles.

Authorization for a role includes, but is not limited to, authorization of a form, authorization of a menu, or authorization of a function.

When said role is created, a department must be selected. Once the role is created, the role belongs to the department, the role is unique under the department, and the role is authorized according to the work content of the role.

If the user wants to change the department, it involves cross-department transfer. The specific operation process includes: (1) canceling the relation between the user and the role in the original department; and (2) relating the user to the role in the new department.

After the role is created, the role may be related to a user in the process of creating the user, or related to the user at any time after the user is created. After the user is related to the role, the relation to the role can be canceled at any time, and the relation to other roles can also be created at any time.

[Embodiment 2] A role-based one-to-one method for granting permission to a user includes the following sequential steps: S1: creating roles, each role being an independent individual, not a group/class; S2: relating a user to a role, wherein one role can only be related to a unique user in the same period, and one user is related to one or more roles; S3: authorizing the roles created in S1 respectively.

[Embodiment 3] In order to implement the foregoing method for granting permission, a role-based one-to-one system for granting permission to a user is provided, including at least a role creation unit, a role authorization unit, and a user-role relation unit. Said role creation unit is used to perform role layout according to posts, and creates system roles, each of which is an independent individual, not a group/class, and said system role is composed of: a post name + a post number. For example: workshop worker 1, workshop worker 2, workshop worker 3, and so on. The role is an independent individual equivalent to the concept of a post number and a work station number, but is different from the role in the conventional permission management system. The concept of a role in the conventional permissions management system is of a group or class nature such as a post, a position, a work type or the like.

Said role authorization unit is used to grant permission to the roles according to the work content of the roles. Said user-role relation unit is used to relate a user to a role and ensure that one role can only be related to a unique user during the same period, and one user is related to one or more roles.

[Embodiment 4] The following example shows the relationship between employees, users and roles after the employee Zhang San enters a company: 1. Recruiting: after the employee is recruited, the user (employee) is directly related to a role of a corresponding post number or work station number. For example, when Zhang San joins the company (the company assigns a user to Zhang San) and is responsible for the sale of refrigerator products in Beijing area under the sales department I (the corresponding role is "sales engineer 5" under sales department I), the user Zhang San directly selects the role of "sales engineer 5" and the relation can be done
2. Adding position: After Zhang San works for a period of time, the company arranges Zhang San to be responsible for the sale of TV products in Beijing area (the corresponding role is "sales engineer 8" under sales department I) and to also serve as a supervisor of an after-sales department (a corresponding role is "after-sales department supervisor 1). In this case, two roles, that is, "sales engineer 8" under sales department I and "after-sales department supervisor 1" under the after-sales department, are additionally related to the user Zhang San. In this case, the employee Zhang San is related to three roles: "sales engineer 5" and "sales engineer 8" under sales department I, and "after-sales department supervisor 1" under the after-sales department. Therefore, the user Zhang San has permissions of the three roles.
3. Reducing position: After another period of time, the company decides to let Zhang San serve as an after-sales department manager (corresponding to a role "after-sales manager" under the after-sales department) and no longer take up other posts. In this case, the user Zhang San is related to the role of "after-sales department manager" under the after-sales department, and the three roles previously related ("sales engineer 5" and "sales engineer 8" under sales department I, and "after-sales department supervisor 1" under the sales department) are canceled. In this case, the user Zhang San only has the authority of the role of "after-sales department manager" under the after-sales department.
4. Adjustment of permissions of role (for the adjustment of the permissions of the role itself): If the company decides to add permissions to the after-sales department manager, the permissions only need to be added to the role of the after-sales department manager. With the increase in the permissions of the role of the after-sales department manager, the permissions of the user Zhang San are also increased.
5. Resigning: After one year, Zhang San resigns. In this case, it is only necessary to cancel the relationship between the user Zhang San and the role "after-sales department manager" under the after-sales department.

For example, during dynamic operation of the company, recruiting and resigning of staff often occur continuously, but post numbers or work station numbers seldom change (or even remain unchanged within a period of time).

Conventional authorization method: in the case of a large number of system functions, the authorization with the conventional group/class role involves heavy and cumbersome workloads and is error-prone. Even worse, errors cannot be easily detected in a short time and tend to cause damage to a system user.

In the authorization method according to the present application, roles of a post number or work station number nature are authorized in the present application, and users are related to the roles so that permissions of the users are determined. Therefore, the permissions of the users are controlled merely through a simple user-role relation. Permission control is simple, easy to operate, clear, and explicit, thereby significantly improving efficiency and reliability of authorization.

The above are merely preferred embodiments of the present invention, and it should be understood that the present invention is not limited to the forms disclosed herein, and is not to be construed as being limited to the other embodiments, but may be used in various other combinations, modifications and environments. Modifications can be made by the techniques or knowledge of the above teachings or related art within the scope of the teachings herein. All changes and modifications made by those skilled in the art are intended to be within the scope of the appended claims.

## Claims

1. A role-based one-to-one method for granting permission to a user, comprising the following sequential steps:
S1: creating roles, each role being an independent individual, not a group/class;
S2: authorizing the roles created in S1 respectively; and
S3: relating a user to a role, wherein one role can only be related to a unique user in the same period, and one user is related to one or more roles.

2. The role-based one-to-one method for granting permission to a user according to claim 1, wherein when said role is created, a department must be selected, once said role is created, said role belongs to said department, and said role is unique under said department, and said role is authorized according to the work content of said role.

3. The role-based one-to-one method for granting permission to a user according to claim 2, further comprising a cross-department transfer management step, which specifically comprises:
(1) canceling the relation between said user and said role in an original department; and
(2) relating said user to a role in a new department.

4. The role-based one-to-one method for granting permission to a user according to claim 1, wherein said user only can determine the permission through the relation of said user to said role.

5. A role-based one-to-one method for granting permission to a user, comprising the following sequential steps:
S1: creating roles, each role being an independent individual, not a group/class;
S2: relating a user to a role, wherein one role can only be related to a unique user in the same period, and one user is related to one or more roles; and
S3: authorizing the roles created in S1 respectively.

6. The role-based one-to-one method for granting permission to a user according to claim 5, when said role is created, a department must be selected, once said role is created, said role belongs to the department, and said role is unique under the department, and said role is authorized according to the work content of said role.

7. The role-based one-to-one method for granting permission to a user according to claim 5, further comprising a cross-department transfer management step, which specifically comprises:
(1) canceling the relation between said user and said role in an original department; and
(2) relating said user to a role in a new department.

8. The role-based one-to-one method for granting permission to a user according to claim 5, wherein said user only can determine the permission through the relation of said user to said role.

9. A role-based one-to-one system for granting permission to a user, comprising: a role creation unit, a role authorization unit, and a user-role relation unit, wherein
said role creation unit is used to perform role layout according to posts, and create system roles, each of which is an independent individual, not a group/class;
said role authorization unit is used to grant permissions to the roles according to the work content of the roles s; and
said user-role relation unit is used to relate a user to a role and ensure that one role can only be related to a unique user during the same period, and one user is related to one or more roles.

10. The role-based one-to-one system for granting permission to a user according to claim 9, wherein said system role is composed of: a post name + a post number.
